# EUROPEAN PATENT APPLICATION

(11) **EP 4 819 027 A1**
(43) Date of publication of application: **07.10.2026**
(21) Application number: 24896940.4
(22) Date of filing: 26.04.2024
(51) Int. Cl.: G06Q 50/16

(54) **REAL ESTATE EVALUATION DEVICE, REAL ESTATE EVALUATION METHOD, AND REAL ESTATE EVALUATION PROGRAM**

(30) Priority: 30.11.2023 WO PCT/JP2023/042855
(71) Applicant: Mitsubishi Electric Corporation, Tokyo 100-8310 (JP); MUFG Bank, Ltd., Tokyo 100-8388 (JP)
(72) Inventor: KURIHARA, Kohei, Tokyo 100-8310 (JP); SAITO, Susumu, Tokyo 100-8310 (JP); ENOMOTO, Naoto, Tokyo 102-0072 (JP); KUMENO, Kazutaka, Tokyo 102-0072 (JP); KOGURE, Yasuhiro, Tokyo 100-8388 (JP); HASEGAWA, Takahiro, Tokyo 100-8388 (JP); HASHIZUME, Takumi, Tokyo 100-8388 (JP); KASAHARA, Hirofumi, Tokyo 100-8388 (JP); NODA, Kazuhiro, Tokyo 100-8388 (JP); KASHIWABARA, Takehito, Tokyo 100-8388 (JP); TOGUCHI, Yasushi, Tokyo 100-8310 (JP); MATSUMOTO, Yutaka, Tokyo 100-8310 (JP)
(74) Representative: Hoffmann Eitle
(86) International application number: PCT/JP2024/016499
(87) International publication number: WO 2025/115248

(57) **Abstract**

A real-estate valuation apparatus (100) valuates a target real estate (31). A range acquiring unit (110) acquires a target range (51) including the position of the target real estate (31) based on a real-estate database (200). An image analyzing unit (120) acquires a remote sensing image (521) taking the target range (51) as an observation range. The image analyzing unit (120) extracts, as real-estate valuation information (53) of the target real estate (31), information of a combination of at least two or more pieces of various pieces of data of real-estate state information and real-estate peripheral information.

## Description

### Technical Field

The present disclosure relates to a real-estate valuation apparatus, a real-estate valuation method, and a real-estate valuation program.

### Background Art

There is a task of valuating the state or value of a collateral in real estates in view of its physical state, legal problem, and valuated value. Conventionally, this task has been achieved by a surveyor performing field investigation of the collateral by visual inspection. However, visual inspection by a surveyor has a limit in working hours and working range.

In Patent Literature 1, a valuation apparatus is disclosed in which the ground surface is analyzed by utilizing SAR satellite data and extracting tilt information of a real estate, thereby calculating a valuation value regarding the asset value of the real estate. SAR is an abbreviation of Synthetic Aperture Radar.

### Citation List

### Patent Literature

Patent Literature 1: WO 2023/126989

### Summary of Invention

### Technical Problem

In the technology of Patent Literature 1, the condition of the target real estate is valuated from a limited aspect of tilting. On the other hand, in actual field investigation for real-estate valuation, more items are valuated. In field investigation for real-estate valuation, to solve the problem of limitation in working hours and working range, it is required to achieve omission of field investigation by exhaustively replacing these valuation items.

In the present disclosure, the process of extracting real-estate valuation information serving as a valuation item of the target real estate is replaced by using a remote sensing image. With this, an object is to achieve omission of field investigation, achieve an increase in efficiency regarding the period and cost of the task, and suppress a limitation in working hours and working range.

### Solution to Problem

A real-estate valuation apparatus according to the present disclosure includes:
a range acquiring unit to acquire, based on valuation target information in which information regarding a target real estate, which is a valuation-target real estate, is stored, a target range including a position of the target real estate; and
an image analyzing unit to extract, by acquiring a remote sensing image having an observation range including the target range and performing image analysis on the remote sensing image, real-estate valuation information, which is information for use in valuation of the target real estate, the real-estate valuation information including road-related information indicating a position relation between the target real estate and a peripheral road of the target real estate.

### Advantageous Effects of Invention

In the real-estate valuation apparatus according to the present disclosure, the process of extracting real-estate valuation information serving as a valuation item of the target real estate is replaced by using a remote sensing image. With this, according to the real-estate valuation apparatus according to the present disclosure, it is possible to achieve omission of field investigation, achieve an increase in efficiency regarding the period and cost of the task, and suppress a limitation in working hours and working range.

### Brief Description of Drawings

Fig. 1 is a diagram depicting an example of structure of a real-estate valuation apparatus according to Embodiment 1.
Fig. 2 is a flow diagram depicting an example of real-estate valuation process, which is of an operation of the real-estate valuation apparatus according to Embodiment 1.
Fig. 3 is a diagram depicting a list of various pieces of data of real-estate valuation information according to Embodiment 1.
Fig. 4 is a diagram describing valuation indexes of an adjacent-land boundary included in the real-estate valuation information according to Embodiment 1.
Fig. 5 is a diagram describing valuation indexes of a connecting-road condition and frontage included in the real-estate valuation information according to Embodiment 1.
Fig. 6 is a diagram describing valuation indexes of a land-shaping degree and land tilting included in the real-estate valuation information according to Embodiment 1.
Fig. 7 is a flow diagram depicting an example of updating process by an updating unit according to Embodiment 1.
Fig. 8 is a diagram depicting priority levels at the time of revaluation in the real-estate valuation apparatus according to Embodiment 1.
Fig. 9 is a diagram depicting an example of structure of the real-estate valuation apparatus according to Modification 4 of Embodiment 1.
Fig. 10 is a diagram depicting an example of structure of the real-estate valuation apparatus according to Modification 5 of Embodiment 1.
Fig. 11 is a diagram depicting an example of structure of a real-estate valuation apparatus according to Embodiment 2.
Fig. 12 is a flow diagram depicting an example of real-estate valuation process, which is of an operation of the real-estate valuation apparatus according to Embodiment 2.
Fig. 13 is a diagram depicting an example of structure of the real-estate valuation apparatus according to a modification of Embodiment 2.

### Description of Embodiments

In the following, a present embodiment is described by using the drawings. In each drawing, identical portions or corresponding portions are provided with the same reference numerals. In the description of the embodiment, description of identical or corresponding portions is omitted or simplified as appropriate. An arrow in a drawing mainly indicates a flow of data or process.

### Embodiment 1.

### ***Description of Structure***

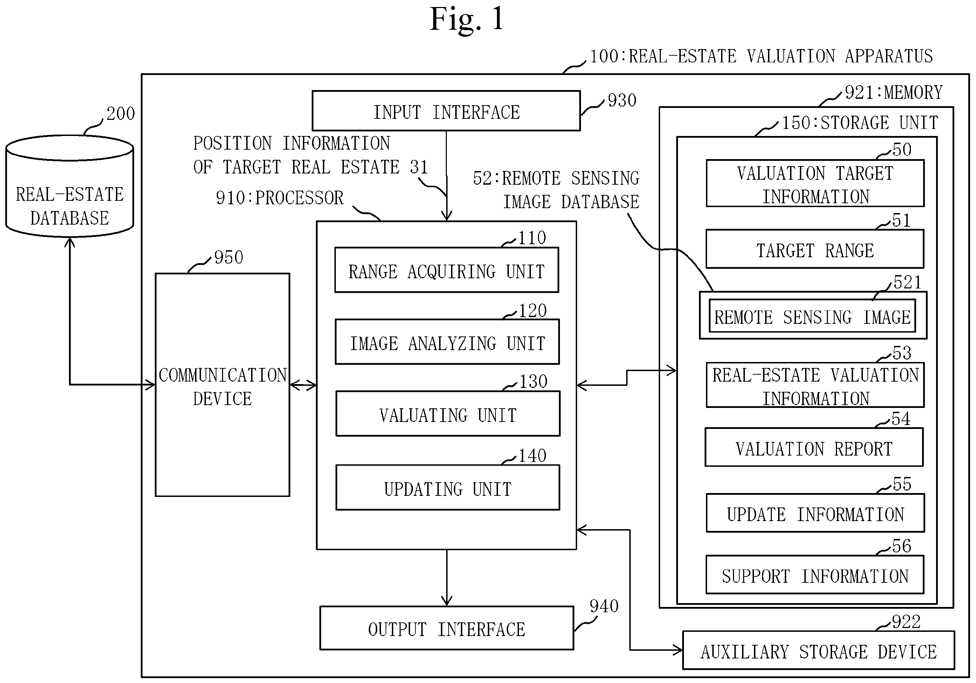

Fig. 1 is a diagram depicting an example of structure of a real-estate valuation apparatus 100 according to the present embodiment.

The real-estate valuation apparatus 100 is a computer. The real-estate valuation apparatus 100 includes a processor 910 and also includes other pieces of hardware such as a memory 921, an auxiliary storage device 922, an input interface 930, an output interface 940, and a communication device 950. The processor 910 is connected to other pieces of hardware via a signal line to control these pieces of hardware.

The real-estate valuation apparatus 100 includes, as functional elements, a range acquiring unit 110, an image analyzing unit 120, a valuating unit 130, an updating unit 140, and a storage unit 150. In the storage unit 150, valuation target information 50, a target range 51, a remote sensing image database 52, real-estate valuation information 53, a valuation report 54, update information 55, and support information 56 are stored. In the remote sensing image database 52, a remote sensing image 521 is registered.

The functions of the range acquiring unit 110, the image analyzing unit 120, the valuating unit 130, and the updating unit 140 are implemented by software. The storage unit 150 is included in the memory 921. Note that the storage unit 150 may be included in the auxiliary storage device 922 or may be included as distributed into the memory 921 and the auxiliary storage device 922.

The processor 910 is a device that executes a real-estate valuation program. The real-estate valuation program is a program that implements the functions of the range acquiring unit 110, the image analyzing unit 120, the valuating unit 130, and the updating unit 140.

The processor 910 is an IC that performs arithmetic processing. Specific examples of the processor 910 are a CPU, DSP, and GPU. IC is an abbreviation of Integrated Circuit. CPU is an abbreviation of Central Processing Unit. DSP is an abbreviation of Digital Signal Processor. GPU is an abbreviation of Graphics Processing Unit.

The memory 921 is a storage device that temporarily stores data. A specific example of the memory 921 is an SRAM or DRAM. SRAM is an abbreviation of Static Random Access Memory. DRAM is an abbreviation of Dynamic Random Access Memory.

The auxiliary storage device 922 is a storage device that retains data. A specific example of the auxiliary storage device 922 is an HDD. Also, the auxiliary storage device 922 may be a portable storage medium such as an SD (registered trademark) memory card, CF, NAND flash, flexible disk, optical disk, compact disk, Blu-ray (registered trademark) disc, or DVD. HDD is an abbreviation of Hard Disk Drive. SD (registered trademark) is an abbreviation of Secure Digital. CF is an abbreviation of CompactFlash (registered trademark). DVD is an abbreviation of Digital Versatile Disk.

The input interface 930 is a port to be connected to an input device such as a mouse, keyboard, or touch panel. The input interface 930 is, specifically, a USB terminal. The input interface 930 may be a port to be connected to a LAN. USB is an abbreviation of Universal Serial Bus. LAN is an abbreviation of Local Area Network.

Also, the input interface 930 may be connected to a real-estate database 200. While one input interface 930 is depicted in Fig. 1, a plurality of input interfaces 930 may be present.

The output interface 940 is a port to which a cable of an output device such as a display is to be connected. The output interface 940 is, specifically, a USB terminal or HDMI (registered trademark) terminal. The display is, specifically, an LCD. The output interface 940 is also called a display interface. HDMI (registered trademark) is an abbreviation of High Definition Multimedia Interface. LCD is an abbreviation of Liquid Crystal Display.

Also, the output interface 940 may be connected to the real-estate database 200. While one output interface 940 is depicted in Fig. 1, a plurality of output interfaces 940 may be present.

The communication device 950 has a receiver and a transmitter. The communication device 950 is connected to a communication network such as a LAN, the internet, telephone line, or Wi-Fi (registered trademark). The communication device 950 is, specifically, a communication chip or NIC. Note that the communication device 950 may have a role of a communication interface that acquires information from the real-estate database 200 by wires or wirelessly. NIC is an abbreviation of Network Interface Card.

The real-estate valuation program can be executed at the real-estate valuation apparatus 100. The real-estate valuation program is read into the processor 910 and executed by the processor 910. In the memory 921, not only the real-estate valuation program but also an OS is stored. OS is an abbreviation of Operating System. While executing the OS, the processor 910 executes the real-estate valuation program. The real-estate valuation program and the OS may be stored in the auxiliary storage device 922. The real-estate valuation program and the OS stored in the auxiliary storage device 922 are loaded into the memory 921 and executed by the processor 910. Note that the entire or part of the real-estate valuation program may be incorporated into the OS.

The real-estate valuation apparatus 100 may include a plurality of processors that replace the processor 910. The plurality of these processors share the load of executing the real-estate valuation program. As with the processor 910, each processor is a device that executes the real-estate valuation program.

Data, information, a signal value, and a variable value to be used, processed, or outputted by the real-estate valuation program are stored in the memory 921, the auxiliary storage device 922, or a register or cache memory in the processor 910.

The "unit" of each unit of the range acquiring unit 110, the image analyzing unit 120, the valuating unit 130, and the updating unit 140 may be read as "circuit", "step", procedure", "process", or "circuitry". The real-estate valuation program causes a computer to execute a range acquiring process, an image analyzing process, a valuating process, and an updating process. The "process" of the range acquiring process, the image analyzing process, the valuating process, and the updating process may be read as "program", "program product", "computer-readable storage medium having a program stored therein", or "computer-readable recording medium having a program recorded thereon". Also, the real-estate valuation method is a method to be performed by the real-estate valuation apparatus 100 executing the real-estate valuation program.

The real-estate valuation program may be stored in a computer-readable recording medium to be provided. Also, the real-estate valuation program may be provided as a program product.

### ***Description of Operation***

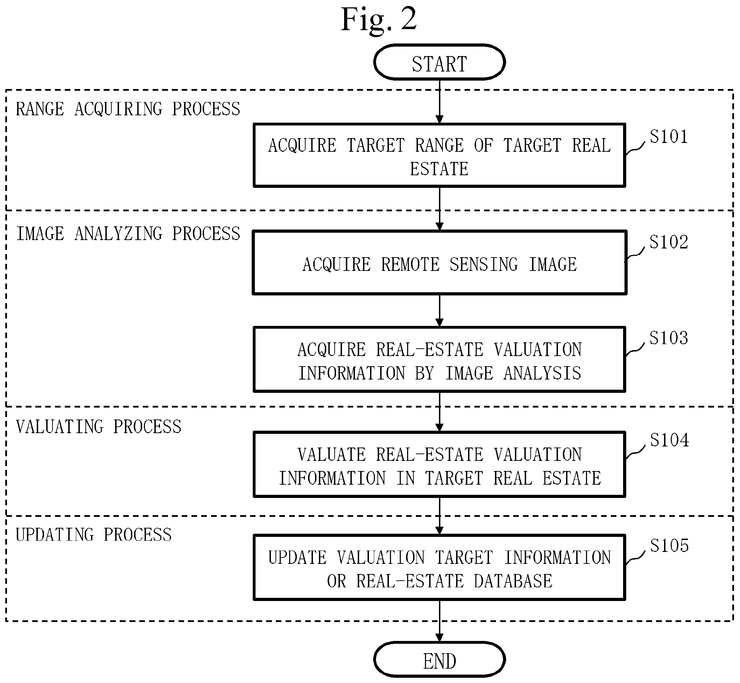

Fig. 2 is a flow diagram depicting an example of real-estate valuation process, which is of an operation of the real-estate valuation apparatus 100 according to the present embodiment.

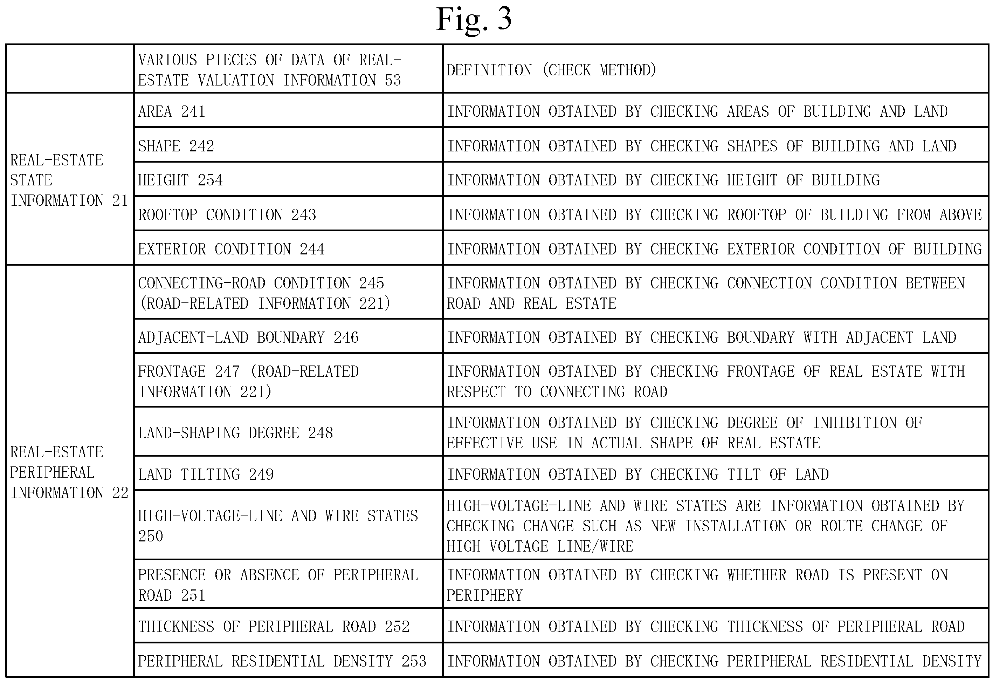

Fig. 3 is a diagram depicting a list of various pieces of data of real-estate valuation information 53 according to the present embodiment.

By using Fig. 2 and Fig. 3, the operation of the real-estate valuation apparatus 100 according to the present embodiment is described. The operation procedure of the real-estate valuation apparatus 100 corresponds to a real-estate valuation method. Also, a program that implements the operation of the real-estate valuation apparatus 100 corresponds to a real-estate valuation program.

### <Range acquiring process: step S101>

In range acquiring process, the range acquiring unit 110 acquires the valuation target information 50 having stored therein information regarding a target real estate 31, which is a valuation-target real estate. The range acquiring unit 110 acquires the target range 51 including the position of the target real estate 31 based on the valuation target information 50.

For example, the range acquiring unit 110 acquires the valuation target information 50 having stored therein the information regarding the target real estate 31 from a user via the input interface 930.

Alternatively, the range acquiring unit 110 may acquire the position information of the target real estate 31 from the user via the input interface 930 and generate the valuation target information 50 having stored therein information regarding the target real estate 31 with reference to the real-estate database 200.

The input interface 930 acquires information about the parcel number of the target real estate 31 from the user and acquires position information of the target real estate 31 corresponding to the information about the parcel number with reference to the real-estate database 200. Then, the range acquiring unit 110 may generate the valuation target information 50 having stored therein information regarding the target real estate 31. For example, the input interface 930 allows the user to input the information about the parcel number. With the user inputting the information about the parcel number, the information about the parcel number may be acquired and the valuation target information 50 having stored therein information regarding the target real estate 31 may be generated. Also, the input interface 930 may allow, for example, an input of a target parcel-number list having stored therein a plurality of parcel numbers of the target real estate 31 by the user. In this manner, with the user inputting the target parcel-number list, the information about the parcel numbers may be acquired. Then, the range acquiring unit 110 may generate the valuation target information 50 having stored therein information regarding the target real estate 31.

Also, the input interface 930 may acquire information about a house number of the target real estate 31 from the user and acquire the position information of the target real estate 31 corresponding to the information about the house number with reference to the real-estate database 200. Then, the range acquiring unit 110 may generate the valuation target information 50 having stored therein information regarding the target real estate 31. For example, the input interface 930 allows the user to input the information about the house number. With the user inputting the information about the house number, the information about the house number may be acquired. Then, the range acquiring unit 110 may generate the valuation target information 50 having stored therein information regarding the target real estate 31.

Also, the input interface 930 allows, for example, an input of a target house-number list having stored therein a plurality of house numbers of the target real estate 31 by the user. With the user inputting the target house-number list, information about the house numbers may be acquired. Then, the range acquiring unit 110 may generate the valuation target information 50 having stored therein information regarding the target real estate 31.

The valuation target information 50 generated in advance may be acquired, or the valuation target information 50 may be acquired by being generated with reference to the real-estate database 200.

The real-estate database 200 is a database having registered therein information regarding real estates. The real-estate database 200 may be configured of one database. Alternatively, the real-estate database 200 may be configured of a plurality of databases regarding real estates registered at various locations.

The valuation target information 50 is a database having registered therein information regarding the target real estate 31. The real-estate database 200 and the valuation target information 50 are assumed to include common items regarding real estates as the information regarding real estates. As common items regarding real estates in the information regarding real estates, for example, the pieces of information are registered, such as a parcel number, position information of a real estate including typical position coordinate information corresponding to the parcel number, a location, land, and building/house number. Also, as common items regarding real estates in the information regarding real estates, for example, the pieces of information are registered, such as position information of the real estate including typical position coordinate information corresponding to the house number, compartmentalized ownership building, owner's name, registration of whether disposal is restricted, and relation between the land and the building. Furthermore, as common items regarding real estates in the information regarding real estates, for example, the pieces of information are registered, such as mortgage priority, whether mortgage is present, and details of registration of cancellation.

**In** the valuation target information 50, as information regarding real estates, the pieces of information are registered, such as a parcel number, position information of a real estate corresponding to the parcel number, a location, land, building/house number, position information of the real estate corresponding to the house number, compartmentalized ownership building, owner's name, registration of whether disposal is restricted, relation between the land and the building, mortgage priority, whether mortgage is present, and details of registration of cancellation. Also, the valuation target information 50 may include information such as presence or absence of a building, land area, land shape, building area, building shape, building height, land boundary, building boundary, exterior condition, connecting-road condition, adjacent-land boundary, frontage, land-shaping degree, land tilting, high-voltage-line state, wire state, presence or absence of a peripheral road, thickness of the peripheral road, and peripheral residential density.

The range acquiring process is specifically described.

At step S101, the range acquiring unit 110 accepts the valuation target information 50 inputted from the user via the input interface 930 to cause it to be stored in the storage unit 150. The range acquiring unit 110 acquires, based on the valuation target information 50, the target range 51 including the position of the target real estate 31 and causes it to be stored in the storage unit 150.

Alternatively, via the input interface 930, the range acquiring unit 110 acquires position information of the target real estate 31 desired to be valuated. The range acquiring unit 110 acquires one or a plurality of pieces of position information about the target real estate 31. The range acquiring unit 110 refers to the real-estate database 200 via the communication device 950. Also, with reference to the real-estate database 200, the range acquiring unit 110 acquires the target range 51 including the position of the target real estate 31 based on the position information of the target real estate 31.

### <Image analyzing process: step S102, step S103>

In image analyzing process, the image analyzing unit 120 acquires a remote sensing image having an observation range including the target range 51. The image analyzing unit 120 performs image analysis on the acquired remote sensing image. By performing image analysis on the remote sensing image, the image analyzing unit 120 extracts the real-estate valuation information 53, which is information for use in valuation of the target real estate 31.

In the real-estate valuation information 53, road-related information 221 indicating a position relation between the target real estate 31 and a peripheral road of the target real estate 31 is included.

Also, in the real-estate valuation information 53, real-estate state information 21 indicating the state of the target real estate 31 itself and real-estate peripheral information 22 indicating the peripheral condition of the target real estate 31 are included. The above-described road-related information 221 is an example of the real-estate peripheral information 22 indicating the peripheral condition of the target real estate 31.

Details of the real-estate valuation information 53 will be described further below.

The image analyzing process is specifically described.

At step S102, the image analyzing unit 120 searches the remote sensing image database 52 to acquire a remote sensing image having an observation range including the target range 51.

In the remote sensing image database 52, remote sensing images are registered, such as, for example, SAR satellite data obtained by the SAR satellite observing the ground surface and taking a picture of the ground surface. The remote sensing images are also referred to as satellite images.

The remote sensing image database 52 may be a database outside the real-estate valuation apparatus 100. When the remote sensing image database 52 is an external database, the image analyzing unit 120 refers to the remote sensing image database 52 via the communication device 950.

In the present embodiment, the structure is such that the remote sensing image 521 is registered in the remote sensing image database 52.

As another mode, the image analyzing unit 120 may transmit an observation request for observing the observation range including the target range 51 to the SAR satellite. Then, the image analyzing unit 120 may acquire a remote sensing image newly taken at the SAR satellite.

At step S103, by performing image analysis on the remote sensing image, the image analyzing unit 120 extracts information including at least one piece of various pieces of data of the real-estate state information 21 and the real-estate peripheral information 22 as the real-estate valuation information 53 of the target real estate 31. Alternatively, by performing image analysis on the remote sensing image, the image analyzing unit 120 may extract information of a combination of at least two pieces of various pieces of data of the real-estate state information 21 and the real-estate peripheral information 22 as the real-estate valuation information 53 of the target real estate 31.

More specifically, the image analyzing unit 120 extracts, for example, the real-estate valuation information 53 as described below.

As the target real estate 31, there are three patterns: <1> land only, <2> building only, and <3> both land and building. Based on which of three patterns <1> to <3> the target real estate 31 corresponds to, the image analyzing unit 120 is required to extract the real-estate valuation information 53 for its corresponding pattern.

Thus, for example, in correspondence with the parcel-number information in the target real estate 31, the image analyzing unit 120 extracts the real-estate valuation information 53 including, as building information 2000, the presence or absence of a building that is present inside the target range 51 on the periphery of the position information corresponding to the parcel-number information and, when a building is present, information about that building (building area, shape, rooftop condition, height of the building, exterior condition, and so forth). Also, in correspondence with the house-number information in the target real estate 31, the image analyzing unit 120 extracts the real-estate valuation information 53 including, as land information 2010, land information that is present inside the target range 51 on the periphery of the position information corresponding to the house-number information.

Also, in the pattern of <2>, while value valuation of the land itself where a building is present is out of a valuation target, the valuated value of the land influences valuated value of the building, and thus, practically, land valuation is also performed.

The image analyzing unit 120 extracts the real-estate valuation information 53 including, as the road-related information 221, information indicating the connecting-road condition between the target real estate 31 and the peripheral road.

Also, the image analyzing unit 120 extracts the real-estate valuation information 53 including, as the road-related information 221, information indicating the frontage of the target real estate 31.

Furthermore, the image analyzing unit 120 extracts the real-estate valuation information 53 including adjacent-land boundary information, which is information indicating the state of the boundary between the target real estate 31 and another real estate.

Still further, the image analyzing unit 120 extracts the real-estate valuation information 53 including at least one piece of information of the land-shaping degree, land tilting, peripheral high-voltage-line state, peripheral wire state, presence or absence of a peripheral road, thickness of the peripheral road, and peripheral residential density of the target real estate 31.

The image analyzing unit 120 may extract, as the real-estate valuation information 53, information about a combination of at least two of various pieces of data including the area, shape, rooftop condition, and exterior condition of the building of the real-estate state information 21 and the connecting-road condition, adjacent-land boundary, frontage, land-shaping degree, land tilting, high-voltage-line state, wire state, presence or absence of a peripheral road, thickness of the peripheral road, and peripheral residential density of the real-estate peripheral information 22. **In** the following, the high-voltage-line state and the wire state are also called as high-voltage-line and wire states.

Alternatively, the image analyzing unit 120 may extract, as the real-estate valuation information 53, information about at least one piece of various pieces of data of the real-estate state information 21 and the real-estate peripheral information 22.

Also, the image analyzing unit 120 may extract, as the real-estate valuation information 53, information of various pieces of data of the real-estate state information 21 and the real-estate peripheral information 22 exhaustively.

**In** the following, various pieces of data of the real-estate valuation information 53 are described by using Fig. 3.

Various pieces of data of the real-estate valuation information 53 are data serving as valuation items when the target real estate 31 is valuated.

**In** the real-estate state information 21, for example, various pieces of data are included, such as area 241 and shape 242 of the building and land, building height 254, rooftop condition 243, and exterior condition 244. Also, in the real-estate peripheral information 22, various pieces of data are included, such as connecting-road condition 245, adjacent-land boundary 246, frontage 247, land-shaping degree 248, land tilting 249, high-voltage-line and wire states 250, presence or absence of peripheral road 251, thickness of the peripheral road 252, and peripheral residential density 253.

Note that, as described above, the connecting-road condition 245 and the frontage 247 are examples of the road-related information 221 indicating the position relation between the target real estate 31 and the peripheral road of the target real estate 31.

Also, the above-described various pieces of data of the real-estate valuation information 53 are merely examples, and other information regarding the real estate may be included.

The image analyzing process is specifically described.

The image analyzing unit 120 extracts, from the remote sensing image 521, a peripheral road and a planimetric feature of the target real estate 311. By analyzing a position relation between the extracted planimetric features or a position relation between the road and the planimetric feature, the image analyzing unit 120 extracts various pieces of data of the real-estate valuation information 53 described further below. **In** particular, the image analyzing unit 120 extracts the road-related information 221 by analyzing a position relation between the peripheral road and the planimetric feature of the target real estate 31.

The definition of each piece of data of the real-estate valuation information 53 is as follows.
(1) Area 241: Information obtained by checking the areas of the building and the land.
(2) Shape 242: Information obtained by checking the shapes of the building and the land.
(2-1) Height 254: Information obtained by checking the height of the building.

The image analyzing unit 120 makes the following behaviors for three patterns in which the target real estate 31 is <1> land only, <2> building only, and <3> both land and building. For the building in <2> and <3>, the contour of the building is read to obtain its outer shape and area. The height of the building is acquired by utilizing, for example, information about a stereoscopic view or a signal phase difference of an SAR (synthetic aperture radar). For the land in <1> and <3>, the contour of a land boundary is read to obtain its outer shape and area. The land boundary is obtained by detecting a hedge, wall, fence, or the like. Other than that, it is estimated by referring to information about an area of concrete, soil, or lawn; an array of trees; an edge boundary with a peripheral road; and a pond, river, or the like.

(3) Rooftop condition 243: Information obtained by checking the rooftop of the building from above.

(4) Exterior condition 244: Information obtained by checking the exterior condition of the building.

(5) Connecting-road condition 245: The connecting-road condition is information obtained by checking the connecting condition between a road and the real estate. The image analyzing unit 120 extracts a road and the target real estate 31 in the target range 51 from the remote sensing image. The image analyzing unit 120 analyzes a position relation between the target real estate 31 such as a land or building and a road connecting to the target real estate 31. Based on the analysis result, the image analyzing unit 120 extracts the target real estate 31 and the road, that is, a connecting-road condition with the road. The connecting-road condition 245 is information indicating whether the target real estate 31 is connected to a road.

(6) Adjacent-land boundary 246: Information obtained by checking a boundary with an adjacent land. The adjacent-land boundary 246 is information indicating whether a building or a planimetric feature such as a plant is out of the boundary.

(7) Frontage 247: The frontage is information obtained by checking a frontage of the real estate with respect to the connecting road. The image analyzing unit 120 extracts a road and the target real estate 31 such as a land or building in the target range 51 from the remote sensing image. The image analyzing unit 120 analyzes a position relation between the target real estate 31 and a road connected to the target real estate 31. Based on the analysis result, the image analyzing unit 120 extracts a frontage of the target real estate 31.

(8) Land-shaping degree 248: The shaping degree is information obtained by checking a degree of inhibition of effective use in an actual shape of the real estate.

(9) Land tilting 249: Information obtained by checking the tilt of the land.

(10) High-voltage-line and wire states 250: The high-voltage-line and wire states are information obtained by checking a change such as a new installation or route change of a high voltage line/wire. Here, the high voltage line means a cable connected to a steel tower, and a thing simply called a wire means a cable connected to a power pole. The high-voltage-line and wire states 250 are information associated with a high limitation of the target real estate 31.

(11) Presence or absence of a peripheral road 251: Information obtained by checking whether a road is present on the periphery.

(12) Thickness of the peripheral road 252: Information obtained by checking the thickness of the peripheral road.

(13) Peripheral residential density 253: Information obtained by checking a peripheral residential density.

Other than those described above, as information that can be one of the various pieces of data of the real-estate valuation information 53, information regarding a cliff land and a slope land is present. The information regarding a cliff land and a slope land is obtained by checking the presence or absence of a cliff land and a slope land in the real estate.

The various pieces of data that can be included in the real-estate valuation information 53 by the image analyzing process at the real-estate valuation apparatus 100 are described in more detail.

### <Regarding building>

Regarding the building, in addition to the information from (1) to (4) described above, by the image analyzing process, it is possible to obtain information such as whether any addition, reconstruction, or disappearance is present and information about an exterior maintenance condition. To check a non-registered building or the like, a check of a sign board indicating a construction plan or the like is also included.

**In** the image analyzing process, for the image analyzing unit 120 to determine the rooftop condition or information about addition/reconstruction, it is suitable to use a remote sensing image taken from above as much as possible. Also, for the image analyzing unit 120 to check the exterior maintenance condition, a remote sensing image taken from an oblique direction may be used.

### <Regarding boundary>

As described above, in the information of (6) adjacent-land boundary 246, information about whether the building crosses the boundary. Thus, in the image analyzing process, it is suitable for the image analyzing unit 120 to use a remote sensing image taken from directly above. In the image analyzing process, by extracting a polygon of the boundary from a cadastral map and performing a process of superposing it on the remote sensing image, the image analyzing unit 120 determines whether the building crosses the boundary.

Also, in the information of the (6) adjacent-land boundary 246, information about whether the boundary is as described in the cadastral map. Also in this case, in the image analyzing process, by extracting a polygon of the boundary from the cadastral map and performing a process of superposing it on the remote sensing image, the image analyzing unit 120 determines whether the boundary is as in the cadastral map.

### <Regarding connecting-road condition and frontage>

In (5) connecting-road condition 245 and (7) frontage 247, specifically, information indicating the condition of a connecting road frontage is included. From the information indicating the condition of the connecting road frontage, states are determined such as "whether the frontage is equal to or longer than 2 meters", "whether 2 meters or longer are ensured at a depth portion", "whether the frontage is singly ensured to be equal to or longer than 2 meters", and "the real estate is constricted at an alley portion and 2 meters or longer are not ensured as an effective connecting-road surface".

In the image analyzing process, by analyzing a position relation between the extracted planimetric features or a position relation between the road and the planimetric feature, the image analyzing unit 120 acquires information indicating the condition of the connecting road frontage. Also, by extracting a polygon of the boundary from the cadastral map and performing a process of superposing it on the remote sensing image, the image analyzing unit 120 acquires information indicating the condition of the connecting-road frontage.

### <Valuating process: step S104>

At step S104, the valuating unit 130 valuates the target real estate 31 by using the real-estate valuation information 53. Valuation by the valuating unit 130 is performed based on valuation indexes 41 defined in advance. Then, the valuating unit 130 creates a valuation report 54 indicating the valuation result.

Valuation items in the valuation report 54 are, for example, various pieces of data of the real-estate state information 21 and the real-estate peripheral information 22 depicted in Fig. 3. In the valuation report 54, at least one piece of data may be included among the various pieces of data of the real-estate state information 21 and the real-estate peripheral information 22. Alternatively, in the valuation report 54, a plurality of pieces of data may be included among the various pieces of data of the real-estate state information 21 and the real-estate peripheral information 22. Still alternatively, in the valuation report 54, all pieces of the various pieces of data of the real-estate state information 21 and the real-estate peripheral information 22 may be included exhaustively.

In the present embodiment, in the valuation report 54, road-related information 221 is included among the various pieces of data of the real-estate valuation information 53. Specifically, the real-estate valuation information 53 is included such as the connecting-road condition and the frontage of the target real estate 31. Also in the valuation report 54, adjacent-land boundary information is included among the various pieces of data of the real-estate valuation information 53.

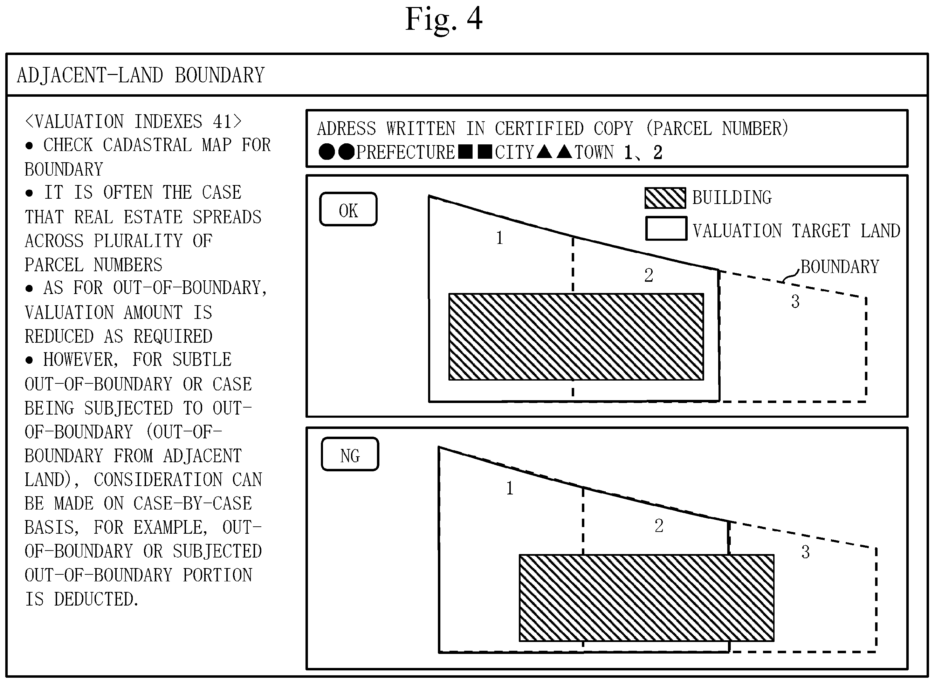

Fig. 4 is a diagram describing the valuation indexes 41 of the adjacent-land boundary 246 included in the real-estate valuation information 53 according to the present embodiment.

In Fig. 4, the target real estate 31 spreads across a plurality of parcel numbers "1 and 2".

On an upper stage, the building falls within the plurality of parcel numbers "1 and 2", and valuation is "OK".

On a lower stage, the building extends to a parcel number "3", and valuation is "NG".

For example, as for out-of-boundary, the valuation amount is reduced as required. However, for subtle out-of-boundary or a case being subjected to out-of-boundary (out-of-boundary from an adjacent land), valuation may be made on a case-by-case basis, for example, an out-of-boundary or subjected out-of-boundary portion is deducted.

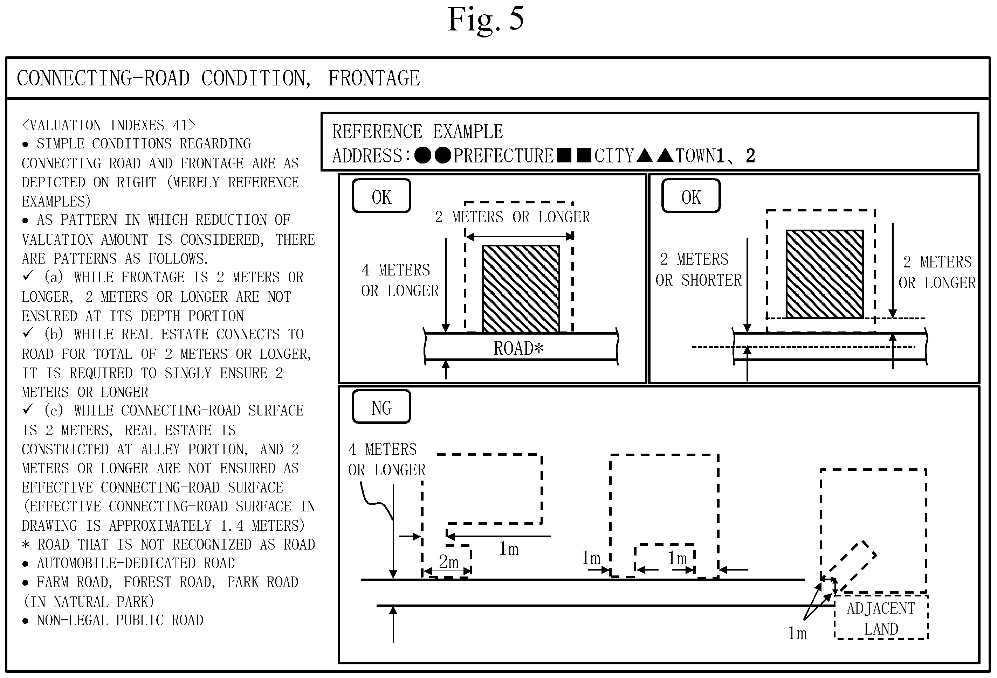

Fig. 5 is a diagram describing the valuation indexes 41 of the connecting-road condition 245 and the frontage 247 included in the real-estate valuation information 53 according to the present embodiment. Note that conditions regarding the connecting road and the frontage depicted in Fig. 5 are merely reference examples.

First, as the connecting-road condition 245, it is required that the target real estate 31 connects to a road.

As the frontage 247, if the connecting-road frontage is 2 meters or longer as on left in an upper stage, valuation is "OK". Also, for a case as on right in the upper stage, valuation is "OK".

A lower stage of Fig. 5 depicts patterns in which the valuation amount is reduced.

In a drawing on left of the lower stage, while the connecting road is 2 meters or longer, 2 meters or longer are not ensured at its depth portion, and therefore the valuation amount is reduced.

In a drawing at the center of the lower stage, while the frontage connects to the road for a total of 2 meters or longer, it is required to singly ensure 2 meters or longer, and therefore the valuation amount is reduced.

In a drawing on right of the lower stage, while the connecting-road surface is 2 meters, the real estate is constricted at an alley portion and 2 meters or longer are not ensured as an effective connecting-road surface, and therefore the valuation amount is reduced. In the drawing on right of the lower stage, it is indicated that the effective connecting-road surface in the drawing is approximately 1.4 meters.

Also, there is a road that is not recognized as a connecting road, such as an automobile-dedicated road, farm road, or forest road.

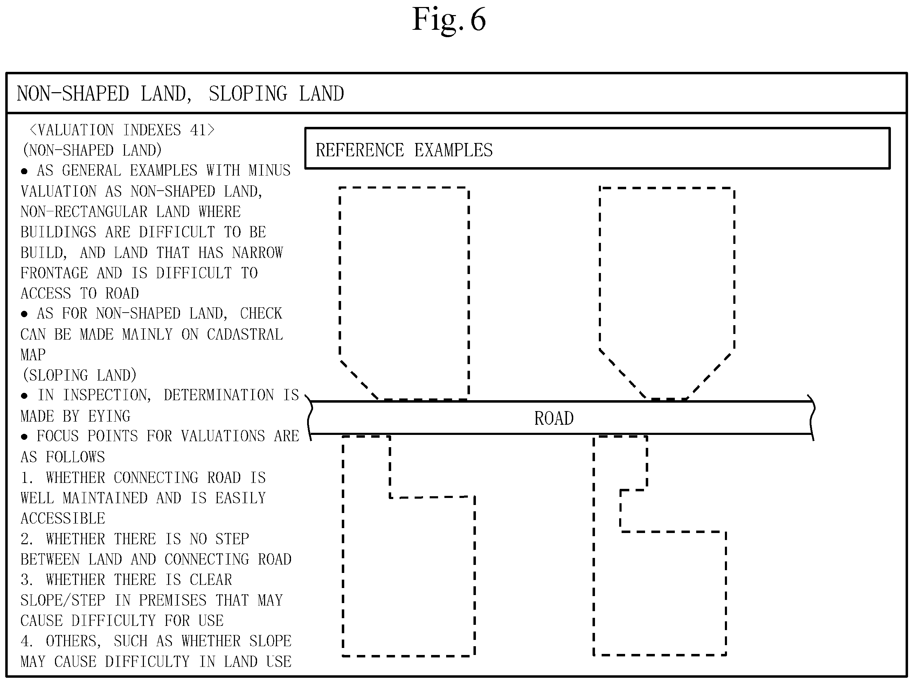

Fig. 6 is a diagram describing the valuation indexes 41 of the land-shaping degree 248 and the land tilting 249 included in the real-estate valuation information 53 according to the present embodiment.

A reference example of Fig. 6 indicates a non-shaped land.

General examples with minus valuation as a non-shaped land are as follows.
- A non-rectangular land where buildings are difficult to be build
- A land that has a narrow frontage and is difficult to access to a road

For the non-shaped land, a determination can be made by mainly using a cadastral map.

Valuation indexes for a sloping land are as follows.
- Whether a connecting road is well maintained and is easily accessible
- Whether there is no step between the land and the connecting road
- Whether there is a clear slope/step in the premises that may cause a difficulty for use
- Others, such as whether the slope may cause a difficulty in land use

### Other valuation indexes 41 are described.

As for a road with the connecting-road condition, presence or absence of a peripheral road, and the thickness of the peripheral road, whether a connecting-road condition determined in the building regulations are satisfied is included in the valuation indexes 41.

Also, the valuation indexes 41 based on a real-estate change are described.

There is a possibility that a building restriction or the like may occur for a collateral depending on a change in the high-voltage line/wire. When a building restriction or the like occurs, the valuation amount of the collateral may be changed.

For the various pieces of data of the real-estate state information 21 and the real-estate peripheral information 22, valuation indexes 41 are generated in view of whether the valuation amount of the collateral is affected. For example, if it is confirmed that an adjacent road becomes narrow to make it difficult for cars to enter and exit or that, with a building being built nearby, insolation conditions become worse, the valuation amount of the collateral is reduced.

### <Updating process: step S105>

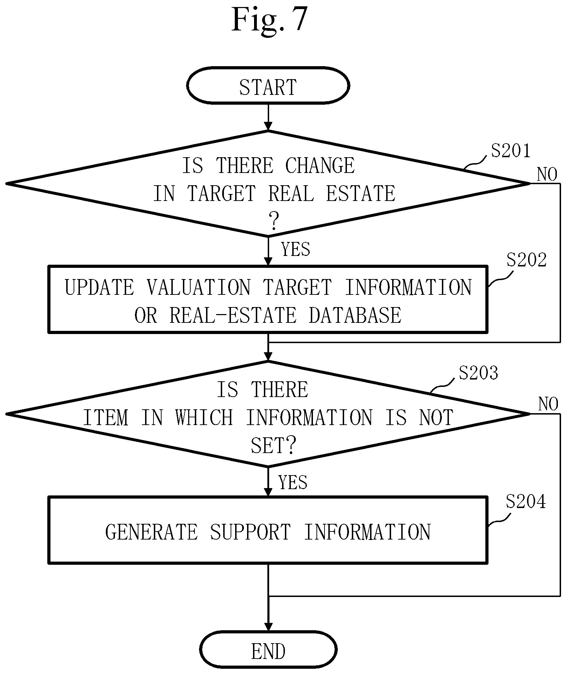

Fig. 7 is a flow diagram depicting an example of updating process by the updating unit 140 according to the present embodiment.

In the updating process, the updating unit 140 compares the information regarding the target real estate 31 registered in the valuation target information 50 and the real-estate valuation information 53 and determines whether there is a change. When determining that there is a change, the updating unit 140 updates the valuation target information 50. Alternatively, when determining that there is a change, the updating unit 140 may generate update information 55 for updating the real-estate database 200 to update the real-estate database 200.

Specifically, the process is as follows.

At step S201, the updating unit 140 compares the information regarding the target real estate 31 registered in the valuation target information 50 and the real-estate valuation information 53.

If there is a change, the process proceeds to step S202.

If there is no change, the process proceeds to step S203.

At step S201, the updating unit 140 updates the valuation target information 50 to the latest information by using the real-estate valuation information 53. Also, the updating unit 140 generates update information 55 for updating the real-estate database 200 by using the real-estate valuation information 53. The updating unit 140 transmits the update information 55 to the real-estate database 200 via the communication device 950. With the update information 55, the information of the real-estate database 200 is updated to the latest information.

At step S203, the updating unit 140 determines whether there is an item in which information is not set in the information regarding the target real estate 31 registered in the valuation target information 50.

If there is an item in which information is not set, the process proceeds to step S204.

If there is not an item in which information is not set, the process ends.

At step S204, the updating unit 140 generates support information 56 for use for checking the item in which information is not set by field investigation. The support information 56 is outputted to an output device such as, for example, a display or printer.

The support information 56 is information to be used by a user for field investigation. In the support information 56, information is included such as, for example, the position information of the target real estate 31 and an investigation item to be subjected to field investigation.

Note that the updating unit 140 may generate the support information 56 in a similar manner also for an item in which information is not set in the information regarding the target real estate 31 registered in the real-estate database 200.

As described above, the valuating unit 130 creates a valuation report 54 for the target real estate 31 registered in the valuation target information 50 or the real-estate database 200. Also, the updating unit 140 creates the update information 55 for updating the valuation target information 50 or the real-estate database 200 to the latest information as required. Furthermore, for the information not set in the valuation target information 50 or the real-estate database 200 and failing to be acquired by the image analyzing unit 120, the updating unit 140 creates the support information 56 for use for checking by field investigation.

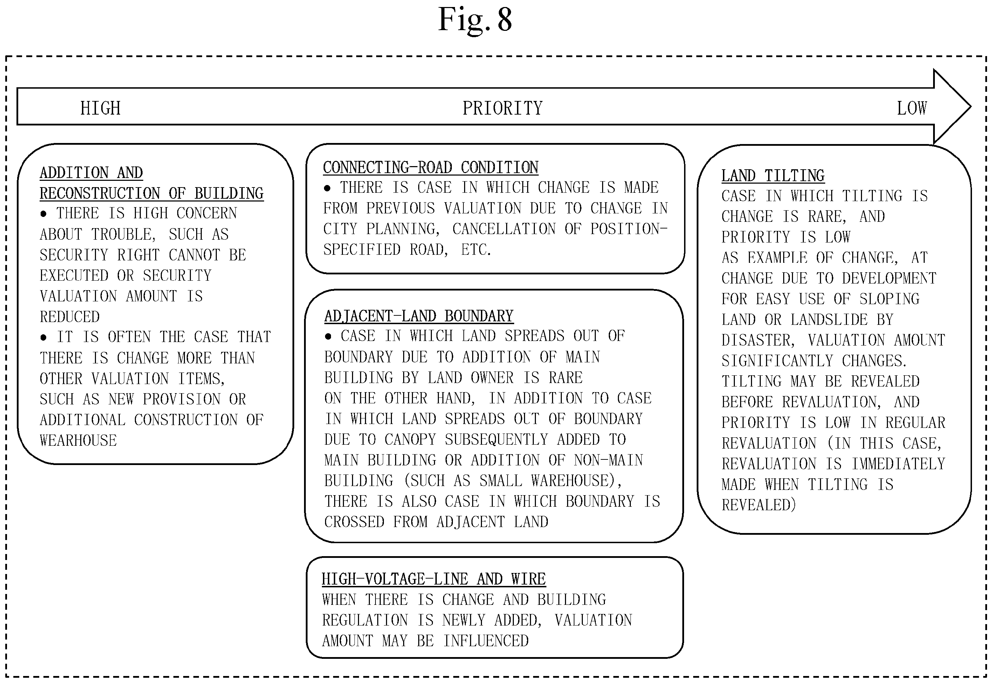

Fig. 8 is a diagram depicting priority levels at the time of revaluation in the real-estate valuation apparatus 100 according to the present embodiment.

The real-estate valuation apparatus 100 according to the present embodiment may be used for initial valuation of the target real estate 31 or for revaluation of the target real estate 31.

As depicted in Fig. 8, priority levels at the time of revaluation are preferably provided as follows, for example.

Valuation item with a "high" priority level: addition and reconstruction of the building

Valuation with an "intermediate" priority level: the connecting-road condition, adjacent-land boundary, high-voltage-line and wire state

Valuation with a "low" priority level: land tilting

Note that the above-described priority levels are merely examples. In view of change frequency and the degree of influence to the security right and the valuation amount at the time of a change, a priority at the time of revaluation using a satellite image may be set and other priority levels may be set.

### ***Other Structures***

### <Modification 1>

The image analyzing unit 120 may acquire a plurality of remote sensing images as a remote sensing image. The plurality of remote sensing images are remote sensing images at different periods, for example, those of two periods.

The image analyzing unit 120 extracts an image change between the remote sensing images in the plurality of remote sensing images, and extracts the real-estate valuation information 53 based on an image change.

Alternatively, the image analyzing unit 120 may reflect the extracted image change in the plurality of remote sensing images to the valuation report.

Still alternatively, the image analyzing unit 120 may provide feedback on the real-estate valuation process by using an image change in a plurality of extracted remote sensing images.

As a method of providing feedback by using an image change, examples include a method of outputting only the presence or absence of a change (such as an alert) and a method of measuring numeric/non-numeric information after the change by analysis to output.

The image analyzing unit 120 extracts an image change between the remote sensing images of the plurality of remote sensing images and outputs an alert based on the image change.

An example of outputting an alert when an image change occurs is described.

For example, by specifying a specific parcel number, it is possible to extract a time-series image change at the specific parcel number with an alert. An alert may be issued when, for example, a change of the adjacent-land boundary or the connecting road occurs in a land corresponding to the specific parcel number.

With this alert, only when any change occurs to the adjacent-land boundary or the connecting road, human-involved field investigation or check of the certified copy of the registration and the survey drawings in a city hall can be performed. Alternatively, by a human performing detailed analysis of a satellite image, it is possible to narrow down targets for human-involved field investigation or satellite image analysis, efficiently and quickly grasp and check a change, and efficiently perform field investigation.

Another example of outputting an alert when an image change occurs is described.

For example, by specifying a specific parcel number, it is possible to extract a time-series image change at the specific parcel number with an alert. Not only a change as in the above-described example, an alert may be issued when, for example, there is a gap between the legal width and the existing width on the connecting road and the peripheral road of the land boundary or when the road on the map is deviated from the present road.

With this alert, if there is any change on the connecting road, it is possible to interpret that there is a possibility that the cadastral map or the survey map itself has an error or a change occurs to the connecting road itself, its adjacent land, or the land corresponding to the specific parcel number. As with the above-described example, it is possible to efficiently and quickly check a target to be subjected to field investigation.

The image analyzing unit 120 acquires, for example, remote sensing images of two periods on the same orbit by the same satellite as a plurality of remote sensing images. Alternatively, the image analyzing unit 120 may acquire each remote sensing image on a different orbit by the same satellite as a plurality of remote sensing images. Still alternatively, the image analyzing unit 120 may acquire remote sensing images of two periods by different satellites as a plurality of remote sensing images.

Also, the number of the plurality of remote sensing images in which an image change is observed may be three or more.

### <Modification 2>

The image analyzing unit 120 may compare the remote sensing image and cadastral map information, which is real-estate boundary information, and extract the real-estate valuation information 53 based on the comparison result.

By comparing the cadastral map information and the remote sensing image, the image analyzing unit 120 extracts an image change in the remote sensing image and extract the real-estate valuation information 53 based on the image change.

### <Modification 3>

The image analyzing unit 120 may acquire geographic space information including the target range 51 and extract the real-estate valuation information 53 by using the remote sensing image and the geographic space information.

The geographic space information is, for example, GIS information. GIS is an abbreviation of Geographic Information System. Also, the geographic space information may be three-dimensional point group data, which is information about planimetric features obtained by measures such as MMS. MMS is an abbreviation of Mobile Mapping System.

By using the geographic space information, more precise real-estate valuation information can be obtained.

The image analysis using the GIS information in Modification 3 is described in detail below.

In matching between the GIS information and a satellite image, a link between a certified copy of a registration, the cadastral map, and an architectural drawing or a public survey standard drawing, and/or the like and the satellite image is made.

For the certified copy of the registration corresponding to the parcel number, position coordinate information corresponding to the parcel number is acquired from a GIS database having the GIS information stored therein.

In the GIS information, the following position coordinates are set in advance and linked.
- Position coordinates of a representative point or reference point (such as a common reference point) of the address corresponding to the parcel number or the certified copy of the registration and the architectural drawing corresponding to the parcel number
- Position coordinates of a representative point or reference point corresponding to the parcel number in a survey drawing (such as parcel survey map or public survey) or parcel area survey drawing (Article 77 of Regulations on Real Property Registration)
- Position coordinates of a representative point or reference point corresponding to the parcel number in the cadastral map or Article 14 map.

These position coordinates are preferably represented in a world geodetic system such as WGS 84, but may be information of latitudes/longitudes/heights represented in the Japanese geodetic system or a plane rectangular coordinate system.

As for a representative point or reference point, a certified control point may be used by taking coordinate values of a boundary point based on the survey result based on a basic triangulation point or the like. Also, as a representative point or reference point, the origin of a map sheet, the coordinates at four corners of the land, the barycenter position of the land, the coordinates of the boundary point, the coordinates of a landmark or boundary point embedded (installed), a point of intersection of boundary lines with respect to an adjacent land or road, or a representative point of a land category in a parcel land may be used.

Also, as the GIS information, map data for use in a navigation device may be used for convenience. In this case, a rough position of the reference point or representative point corresponding to the parcel number may be acquired by using the position coordinates of a representative point or reference point corresponding to an address corresponding to the parcel number.

At the time of matching the satellite image and the GIS information, position matching, association, or linking is performed between the reference position in the satellite image data and a position in the certified copy of the registration, the cadastral map, or the survey drawing.

The reference position in the satellite image data is a reference position in the satellite image, such as a GCP acquired in the satellite image, an image-taking specified point taken or acquired by a satellite-mount camera or radar, or position coordinates of a point of intersection where a visual line axis intersects with a ground surface including the target range 51. GCP is an abbreviation of Ground Control Points.

By matching the reference position in the satellite image data and the position of the representative point or reference point corresponding to the parcel number obtained from the GIS information, position matching, association, or linking is performed between the reference position in the satellite image data and the position in the certified copy of the registration, the cadastral map, or the survey drawing.

Also, in the case of new valuation, by using coordinates obtained by a new survey, position coordination information corresponding to the parcel number may be newly stored in the GIS information. In this case, coordinate obtainment may be performed by public surveying. As surveying, positioning by using a GNSS receiver may be performed. GNSS is an abbreviation of Global Navigation Satellite System.

For example, a device is used, which is defined in Article 93 and so forth of the Surveying Working Regulations for Land Readjustment Projects by the Ministry of Land, Infrastructure, Transport and Tourism. This can be referred to from "https://www.mlit.go.jp/crd/city/sigaiti/materials/sokuryou/sagyoukitei.pdf".

Also, "vehicle-mount photography laser survey" (for example, MMS) defined in "Standards for Working Regulations " may be used (refer to "https://psgsv2.gsi.go.jp/koukyou/jyunsoku/pdf/R5/R5_junsoku.pdf").

Also, "Public Survey Manual Using LidarSLAM Technology" may be used (https://psgsv2.gsi.go.jp/koukyou/public/lidarslam/doc/lidarslam_manual.pdf).

Also, when the coordinate values corresponding to the parcel number are not present in the GIS information, they may be acquired by a new survey, or a rough position corresponding to the parcel number may be obtained by using a map data for use in a navigation device.

In this case, with reference to "the reference position in the satellite image" including the target range corresponding to the rough position, a satellite image corresponding to the reference position may be referred to. A relative comparison is made between the satellite image referred to and the outer shape or peripheral environment in the cadastral map, the survey map, the architectural drawing, or the like. With this comparison, the coordinate position of an adjacent-land boundary or a connecting road of the land corresponding to the parcel number may be measured.

Note that satellites can achieve an increase in business efficiency and exhaustive survey. Thus, for example, an image-taking plan may be made so that the orbit and attitude of the satellite is controlled by using a satellite image observation service in cooperation with satellite control. For example, an image-taking plan may be made so that the target range 51 including a specific parcel number is included with image-taking once or a plurality of times. Also, a directly-below image may be obtained by the satellite passing directly over a specific parcel. Furthermore, a satellite-mount image-taking device may pass over a predetermined position of a specific parcel number. Still further, the satellite-mount image-taking device may take an image directly above a predetermined planimetric feature such as a steel tower or power pole. Still further, an image of a shadow of a predetermined planimetric feature such as a steel tower or power pole may be taken. Still further, an image may be taken from a direction diagonally to a predetermined planimetric feature such as a steel tower or power pole. Still further, a distance to a predetermined planimetric feature such as a wire hung over a steel tower, power pole, or the like, the height of the planimetric feature, or its position of presence may be measured by using a LiDAR or SAR (synthetic aperture radar).

Also, on the occasion of image-taking of one cycle in which the satellite passes in a predetermined orbit, an image may be taken by tracing the target range 51 corresponding to a plurality of specific parcel numbers.

### <Modification 4>

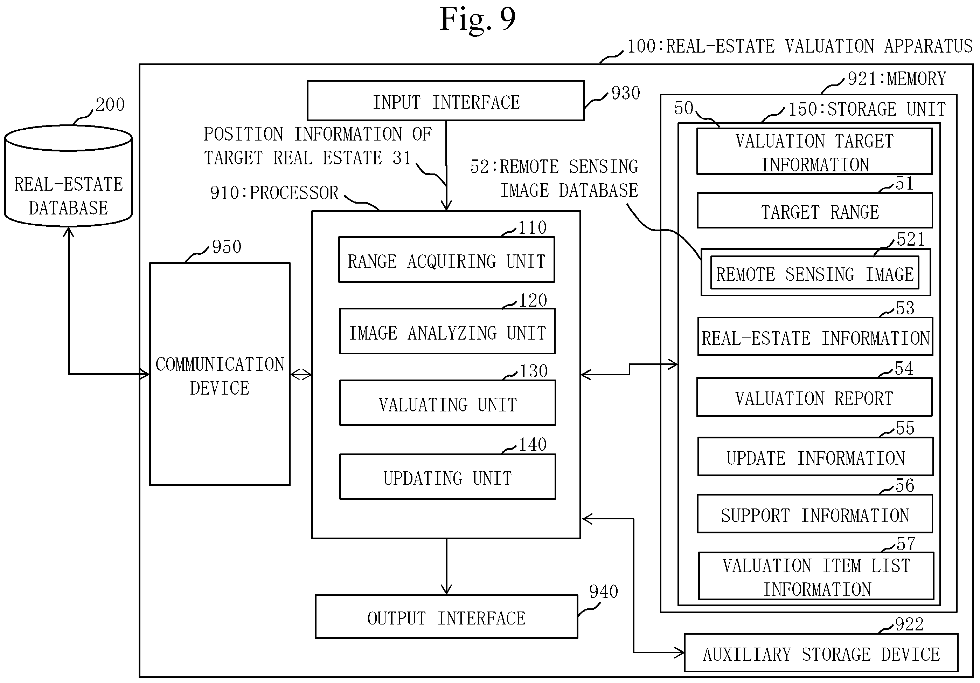

Fig. 9 is a diagram depicting an example of structure of the real-estate valuation apparatus 100 according to Modification 4 of the present embodiment.

In the real-estate valuation apparatus 100 according to Modification 4 of the present embodiment, in addition to the structure of Fig. 1, valuation item list information 57 is included in the storage unit 150.

The valuation item list information 57 is a list of valuation items for valuating the target real estate 31. In the valuation item list information 57, for example, various pieces of data of the real-estate valuation information 53 depicted in Fig. 3 are set as a list of valuation items for valuating the target real estate 31.

The updating unit 140 compares the information regarding the target real estate 31 registered in the real-estate database 200 and the valuation item list information 57. The updating unit 140 extracts an item in which information is not set from among the information regarding the target real estate 31 registered in the real-estate database 200 as information that cannot be updated with the real-estate valuation information 53. Then, the updating unit 140 generates the support information 56 for field investigation about the information that cannot be updated with the real-estate valuation information 53.

### <Modification 5>

In the present embodiment, the functions of the range acquiring unit 110, the image analyzing unit 120, the valuating unit 130, and the updating unit 140 are implemented by software. As a modification, the functions of the range acquiring unit 110, the image analyzing unit 120, the valuating unit 130, and the updating unit 140 may be implemented by hardware.

Specifically, the real-estate valuation apparatus 100 includes an electronic circuit 909 in place of the processor 910.

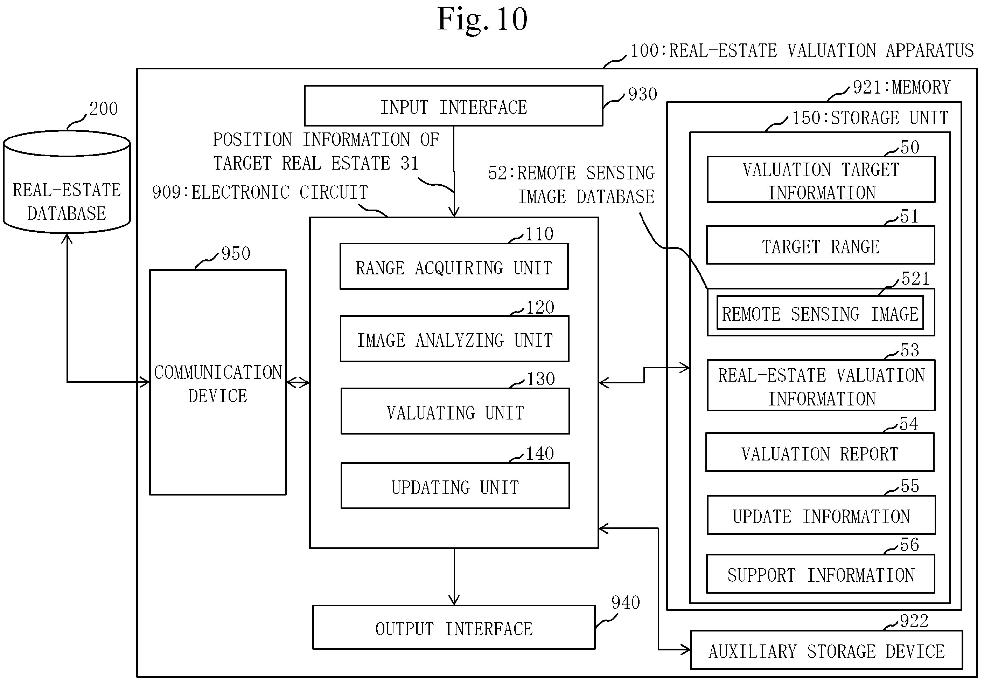

Fig. 10 is a diagram depicting an example of structure of the real-estate valuation apparatus 100 according to Modification 5 of the present embodiment.

The electronic circuit 909 is a dedicated electronic circuit for achieving the functions of the range acquiring unit 110, the image analyzing unit 120, the valuating unit 130, and the updating unit 140. The electronic circuit 909 is, specifically, a single circuit, composite circuit, programmed processor, parallel-programmed processor, logic IC, GA, ASIC, or FPGA. GA is an abbreviation of Gate Array. ASIC is an abbreviation of Application Specific Integrated Circuit. FPGA is an abbreviation of Field-Programmable Gate Array.

The functions of the range acquiring unit 110, the image analyzing unit 120, the valuating unit 130, and the updating unit 140 may be implemented by a single electronic circuit, or may be implemented by being distributed into a plurality of electronic circuits.

As another modification, part of the functions of the range acquiring unit 110, the image analyzing unit 120, the valuating unit 130, and the updating unit 140 may be implemented by an electronic circuit and the remaining functions may be implemented by software. Also, part or all of the functions of the range acquiring unit 110, the image analyzing unit 120, the valuating unit 130, and the updating unit 140 may be implemented by firmware.

The processor and the electronic circuit are each referred to also as processing circuitry. That is, the functions of the range acquiring unit 110, the image analyzing unit 120, the valuating unit 130, and the updating unit 140 are implemented by processing circuitry.

### ***Description of Effects of Present Embodiment* * *

As has been described above, in the real-estate valuation apparatus 100 according to the present embodiment, the valuation items of the target real estate can be exhaustively replaced by using the remote sensing image. With this, omission of field investigation can be achieved. Also, in the real-estate valuation apparatus according to the present embodiment, it is possible to automate a task of valuating the target real estate and creating a valuation report.

In this manner, in accordance with the real-estate valuation apparatus 100 according to the present embodiment, the task of valuating the property value can be automated and made one-stop, and an increase in efficiency regarding the period and cost of the task can be achieved.

Also, in the real-estate valuation apparatus 100 according to the present embodiment, by performing image analysis on the remote sensing image, it is possible to extract various pieces of data of the real-estate state information and the real-estate peripheral information. By using the remote sensing image such as a satellite image, it is also possible to check the exterior condition of a location that cannot be viewed by visual inspection, such as a rooftop or roof floor.

Furthermore, in the real-estate valuation apparatus 100 according to the present embodiment, by using the real-estate valuation information obtained by performing image analysis on the remote sensing image, a valuation report is created for the real estate registered in the real-estate database. Thus, according to the real-estate valuation apparatus 100 of the present embodiment, it is possible to achieve saving of the task for creating a valuation report.

Still further, in the real-estate valuation apparatus 100 according to the present embodiment, by using the latest real-estate valuation information, it is possible to generate update information for updating the information in the real-estate database. Thus, according to the real-estate valuation apparatus 100 of the present embodiment, it is possible to achieve one-stop of the task of updating the real-estate database, and further achieve saving in labor.

Still further, in the real-estate valuation apparatus 100 according to the present embodiment, by using the latest real-estate valuation information, it is possible to update the information in the real-estate database and create support information for field investigation regarding information that cannot be automatically acquired. Thus, according to the real-estate valuation apparatus 100 of the present embodiment, it is possible for the user to know a valuation item for which field investigation is required and exhaustively acquire necessary valuation items with minimum field investigation.

Also, by creating support information, it is possible to perform field investigation by screening out checkpoints based on an individual factor. As checkpoints, examples can include a connecting-road condition (such as a direction, road width, a condition of a bridge if there is a river across the road (including a permission condition)), a change of the boundary, presence or absence of a no-registered building, disappearance of a registered property, slope/step in the premises, and a condition of a cliff land. Normally, it is not permitted to enter the inside of the premises of the target property, and therefore viewing the target property from outside is the only way. Since a trouble may occur, as for a factory or the like, viewing its outer appearance from far away is the only way. According to the real-estate valuation apparatus 100 of the present embodiment, it is possible to detect a change of a non-registered property or the like at a portion that cannot be viewed from outside in the premises, by using satellite data.

### Embodiment 2.

In the present embodiment, points different from Embodiment 1 and points to be added to Embodiment 1 are mainly described.

In the present embodiment, a structure having a similar function as that of Embodiment 1 is provided with the same reference numeral and its description is omitted.

### ***Description of Structure***

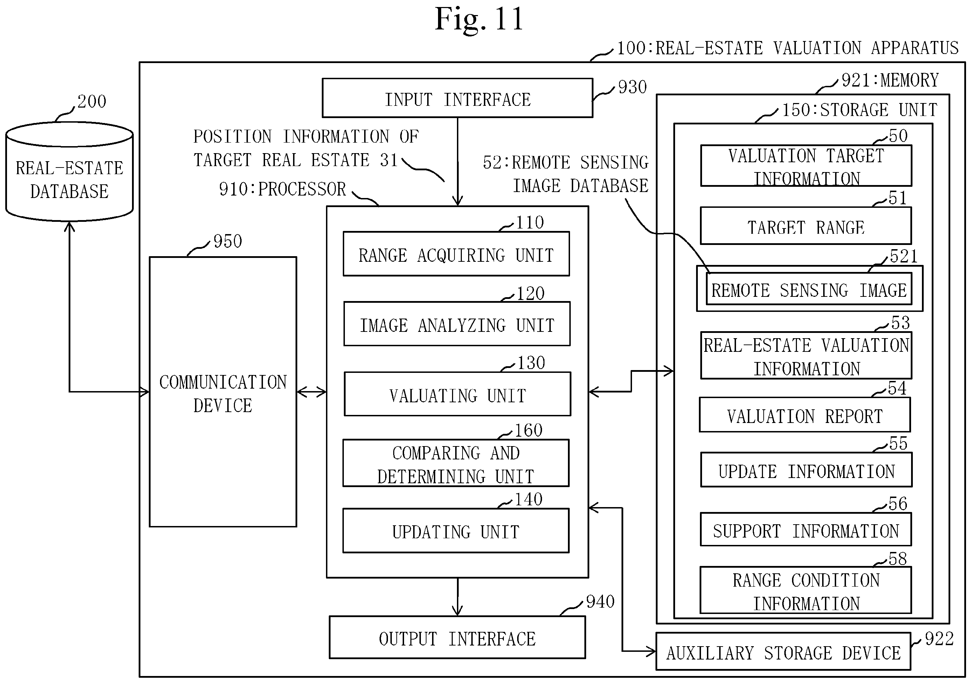

Fig. 11 is a diagram depicting an example of structure of the real-estate valuation apparatus 100 according to the present embodiment.

The real-estate valuation apparatus 100 of Fig. 11 includes, in addition to the structure of the real-estate valuation apparatus 100 of Fig. 1, a comparing and determining unit 160. Also, in the storage unit 150, range condition information 58 is stored.

### ***Description of Operation***

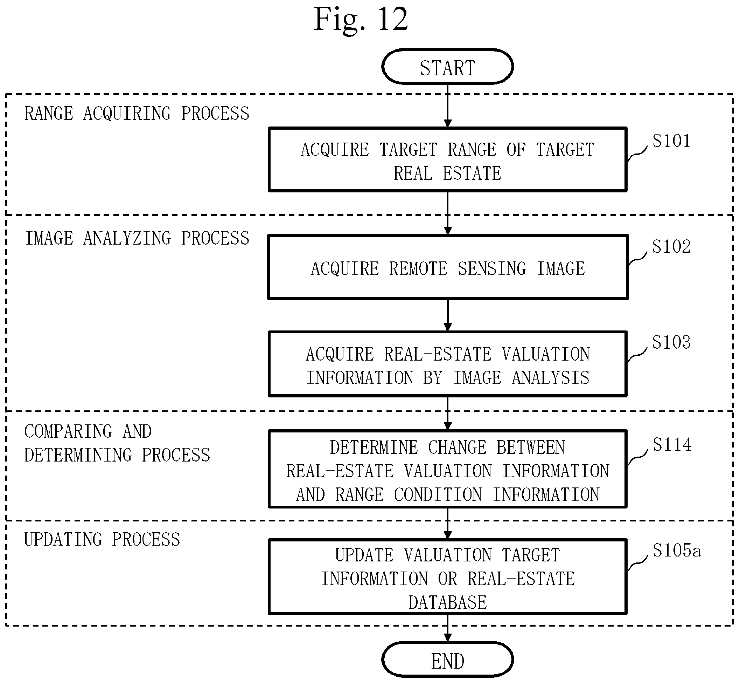

Fig. 12 is a flow diagram depicting an example of real-estate valuation process, which is of an operation of the real-estate valuation apparatus 100 according to the present embodiment.

The operation of the real-estate valuation apparatus 100 according to the present embodiment is described. The operation procedure of the real-estate valuation apparatus 100 corresponds to a real-estate valuation method. Also, a program that implements the operation of the real-estate valuation apparatus 100 corresponds to a real-estate valuation program.

The processes at step S101 to step S103 in Fig. 12 are similar to step S101 to step S103 in Fig. 2.

Note that at step S102, as described in Modification 1, it is assumed that the image analyzing unit 120 acquires a remote sensing image of one period or a plurality of periods having an observation range including the target range 51. As described in Embodiment 1, to update to the latest real-estate valuation information, the image analyzing unit 120 acquires a remote sensing image of one period or a plurality of periods including the latest observation period.

### <Comparing and determining process: step S114>

In the comparing and determining process, the comparing and determining unit 160 compares the real-estate valuation information 53 and the range condition information 58. The comparing and determining unit 160 determines whether there is a change between the real-estate valuation information 53 and the range condition information 58.

The process is specifically as follows.

The comparing and determining unit 160 compares the real-estate valuation information 53 and the range condition information 58 by taking previous information regarding the target real estate 31 stored in the valuation target information 50 (range condition information example 1) as the range condition information 58. The previous information regarding the target real estate 31 stored in the valuation target information 50 is, for example, real-estate valuation information extracted by the real-estate valuation apparatus 100, real-estate actual inspection, real-estate desk valuation, or the like.

The comparing and determining unit 160 may compare the real-estate valuation information 53 and the range condition information 58 by taking a result of image analysis on the remote sensing image having an observation period near the acquisition period of the valuation target information 50 (range condition information example 2) as the range condition information 58. A period near the observation period is, for example, an observation period within one year before and after the acquisition period of the valuation target information 50. Also, the result of image analysis on the remote sensing image indicates a result obtained by extracting information about the target real estate as performed at the image analyzing unit 120 on the remote sensing image 521 newly obtained at the time of change detection.

The comparing and determining unit 160 may compare the real-estate valuation information 53 and the range condition information 58 by taking cadastral map information which is real-estate boundary information (range condition information example 3) as the range condition information 58. The cadastral map information indicates, for example, information such as real-estate boundary information, land position, or shape.

The comparing and determining unit 160 may compare the real-estate valuation information 53 and the range condition information 58 by taking geographic space information including the target range (range condition information example 4) as the range condition information 58. Here, the target range may be a range indicating the land position or shape of the real estate or may be a range indicating a rectangular shape including the relevant land.

Specifically, the comparing and determining unit 160 compares quantitative data or qualitative data in the target real estate 31 and the range condition information 58. The comparing and determining unit 160 determines that a change has occurred between the real-estate valuation information 53 and the range condition information 58 in at least either a case in which the change in the quantitative data exceeds a threshold set in advance or a case in which the qualitative data changes.

The quantitative data and qualitative data in the target real estate 31 are, for example, quantitative data and qualitative data included in various pieces of data of the real-estate valuation information 53 depicted in Fig. 3. The quantitative data is, for example, data such as an area or height. The qualitative data is, for example, data such as "rooftop condition: good, bad".

The comparing and determining unit 160 performs a matching comparison between the quantitative data and qualitative data as described above and the range condition information 58. The range condition information 58 may be each one of the range condition information examples 1 to 4 or may be a combination of at least two of the range condition information examples 1 to 4.

The comparing and determining unit 160 determines that a change has occurred between the real-estate valuation information 53 and the range condition information 58 when, for example, the quantitative data has changed as exceeding the threshold set in advance. Also, the comparing and determining unit 160 determines that a change has occurred when, for example, the qualitative data has changed.

### <Updating process: step S150a>

The process at step S150a in Fig. 12 is basically the same as step S150 in Fig. 2. Here, a process to be added to the description of step S150 in Fig. 2 is described.

If there is a change between the real-estate valuation information 43 and the range condition information 58, the updating unit 140 updates the valuation target information 50 based on that change.

Specifically, the updating unit 140 updates the valuation target information 50 based on timestamp information of a remote sensing image in the latest observation period by using details of the above-described change and a current timestamp.

### ***Other Structures***

### <Modification 6>

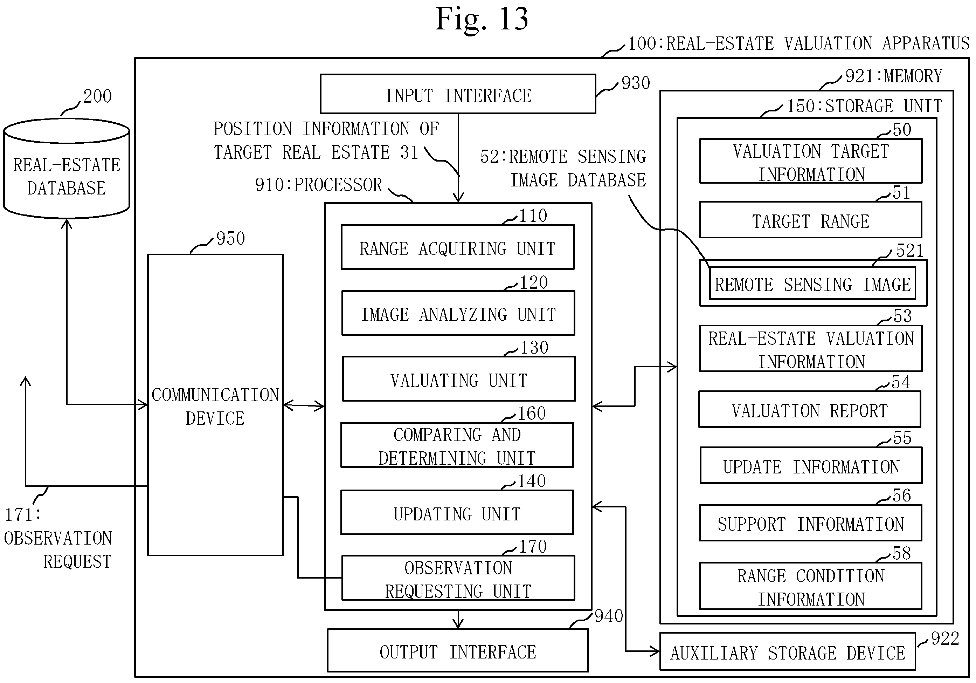

Fig. 13 is a diagram depicting an example of structure of the real-estate valuation apparatus 100 according to a modification of the present embodiment.

The real-estate valuation apparatus 100 of Fig. 13 includes an observation requesting unit 170 in addition to the real-estate valuation apparatus 100 of Fig. 11.

In the modification of the present embodiment, the observation requesting unit 170 transmits an observation request 171, which is a request for observing an observation range including the target range 51, to the satellite.

The observation requesting unit 170 has a function of generating the observation request 171 based on a period or weather of a suitable observation condition such as summer with less shadows. Also, the observation requesting unit 170 may have a function of planning, as an annual plan, an observation once or a plurality of times by matching an observation period (season) included in archives. With this, fluctuations or disturbance influence due to a difference in condition in data comparison is avoided, and change detection is performed with high accuracy.

In Embodiment 1, it is described that the image analyzing unit 120 may transmit, to a satellite, an observation request for observing an observation range including the target range 51. In the modification of the present embodiment, the observation requesting unit 170 having the function as described above is separately provided.

### ***Description of Effects of Present Embodiment* * *

As has been described above, in the real-estate valuation apparatus 100 according to the present embodiment, the-above-described comparing and determining unit and updating unit are included. Thus, according to the real-estate valuation apparatus 100 of the present embodiment, an effect is exerted in which the valuation target information can be updated to the latest state on a real-time basis.

Also, in the real-estate valuation apparatus 100 according to the present embodiment, the above-described observation requesting unit is included. Thus, according to the real-estate valuation apparatus 100 of the present embodiment, fluctuations or disturbance influence due to a difference in condition in data comparison is avoided, and change detection can be performed with high accuracy.

In the above-described Embodiments 1 and 2, each unit of the real-estate valuation apparatus has been described as an independent functional block. However, the structure of the real-estate valuation apparatus may not be the structure as in the above-described embodiments. The functional block of the real-estate valuation apparatus may have any structure that can achieve the function described in the above-described embodiments. Also, the real-estate valuation apparatus may not be a single apparatus but may be a system configured of a plurality of apparatuses.

Also, of Embodiments 1 and 2, a plurality of portions may be combined for implementation. Alternatively, of Embodiments 1 and 2, one portion may be implemented. Other than that, of Embodiments 1 and 2, any combination of the portions can be made, as a whole or partially, for implementation.

That is, in Embodiments 1 and 2, free combination of each embodiment, modification of any component of each embodiment, or omission of any component in each embodiment can be made.

Note that the above-described embodiments are essentially preferable examples and are not intended to limit the range of the present disclosure, the range of an applied article of the present disclosure, and the range of use of the present disclosure. The above-described embodiments can be variously changed as required. For example, the procedure described by using a flow diagram or sequence diagram may be changed as appropriate.

### Reference Signs List

21: real-estate state information; 22: real-estate peripheral information; 31: target real estate; 41: valuation index; 50: valuation target information; 51: target range; 52: remote sensing image database; 521: remote sensing image; 53: real-estate valuation information; 54: valuation report; 55: update information; 56: support information; 57: valuation item list information; 58: range condition information; 100: real-estate valuation apparatus; 110: range acquiring unit; 120: image analyzing unit; 130: valuating unit; 140: updating unit; 150: storage unit; 160: comparing and determining unit; 170: observation requesting unit; 171: observation request; 200: real-estate database; 221: road-related information; 241: area; 242: shape; 243: rooftop condition; 244: exterior condition; 245: connecting-road condition; 246: adjacent-land boundary; 247: frontage; 248: shaping degree; 249: tilting; 250: high-voltage-line and wire states; 251: presence or absence of peripheral road; 252: thickness of peripheral road; 253: residential density; 909: electronic circuit; 910: processor; 921: memory; 922: auxiliary storage device; 930: input interface; 940: output interface; 950: communication device

## Claims

1. A real-estate valuation apparatus comprising:
a range acquiring unit to acquire, based on valuation target information in which information regarding a target real estate, which is a valuation-target real estate, is stored, a target range including a position of the target real estate; and
an image analyzing unit to extract, by acquiring a remote sensing image having an observation range including the target range and performing image analysis on the remote sensing image, real-estate valuation information, which is information for use in valuation of the target real estate, the real-estate valuation information including road-related information indicating a position relation between the target real estate and a peripheral road of the target real estate.

2. The real-estate valuation apparatus according to claim 1, wherein
the image analyzing unit extracts the real-estate valuation information including information indicating a connecting-road condition between the target real estate and the peripheral road as the road-related information.

3. The real-estate valuation apparatus according to claim 1 or 2, wherein
the image analyzing unit extracts the real-estate valuation information including information indicating a frontage of the target real estate as the road-related information.

4. The real-estate valuation apparatus according to any one of claims 1 to 3, wherein
the image analyzing unit extracts the real-estate valuation information including adjacent-land boundary information, which is information indicating a state of a boundary between the target real estate and another real estate.

5. The real-estate valuation apparatus according to any one of claims 1 to 4, wherein
the image analyzing unit extracts the real-estate valuation information including at least one piece of information of a land-shaping degree, land tilting, peripheral high-voltage-line state, peripheral wire state, presence or absence of a peripheral road, thickness of the peripheral road, and peripheral residential density of the target real estate.

6. The real-estate valuation apparatus according to any one of claims 1 to 5, wherein
the image analyzing unit extracts the road-related information by extracting a peripheral road and a planimetric feature of the target real estate from the remote sensing image and analyzing a position relation between the peripheral road and the planimetric feature of the target real estate.

7. The real-estate valuation apparatus according to any one of claims 1 to 6, comprising:
a valuating unit to valuate the target real estate by using the real-estate valuation information and to create a valuation report indicating a valuation result.

8. The real-estate valuation apparatus according to any one of claims 1 to 7, comprising:
an updating unit to compare the information regarding the target real estate stored in the valuation target information and the real-estate valuation information to determine whether there is a change and, if there is a change, update the valuation target information.

9. The real-estate valuation apparatus according to claim 8, comprising:
a communication device to communicate with a real-estate database in which information regarding real estates is registered, wherein
the updating unit compares the information regarding the target real estate stored in the valuation target information and the real-estate valuation information to determine whether there is a change and, if there is a change, generates update information for updating the real-estate database, and transmits the update information to the real-estate database via the communication device.

10. The real-estate valuation apparatus according to claim 8 or 9, wherein
the updating unit determines whether there is an item in which information is not set in the information regarding the target real estate stored in the valuation target information after updating the valuation target information and, if there is an item that cannot be updated with the real-estate valuation information and in which information is not set, generates support information for use for checking, by field investigation, information that cannot be updated with the real-estate valuation information.

11. The real-estate valuation apparatus according to claim 10, wherein
the real-estate valuation apparatus includes valuation item list information, which is a list of valuation items for valuating the target real estate, in a storage unit, and
the updating unit compares the information regarding the target real estate stored in the valuation target information and the valuation item list information and generates the support information by taking the item in which information is not set in the information regarding the target real estate stored in the valuation target information as information that cannot be updated with the real-estate valuation information.

12. The real-estate valuation apparatus according to claim 7, wherein
the image analyzing unit acquires a plurality of said remote sensing images as the remote sensing image, extracts an image change between remote sensing images of the plurality of remote sensing images, and reflects the image change to the valuation report.

13. The real-estate valuation apparatus according to claim 12, wherein
the image analyzing unit extracts an image change between remote sensing images of the plurality of remote sensing images and outputs an alert based on the image change.

14. The real-estate valuation apparatus according to claim 12 or 13, wherein
the image analyzing unit compares the remote sensing image and cadastral map information, which is real-estate boundary information, and reflects a comparison result to the valuation report.

15. The real-estate valuation apparatus according to any one of claims 1 to 14, wherein
the image analyzing unit acquires geographic space information including the target range and extracts the real-estate valuation information by using the remote sensing image and the geographic space information.

16. A real-estate valuation method comprising:
by a computer, acquiring, based on valuation target information in which information regarding a target real estate, which is a valuation-target real estate, is stored, a target range including a position of the target real estate, and
by the computer, extracting, by acquiring a remote sensing image having an observation range including the target range and performing image analysis on the remote sensing image, real-estate valuation information, which is information for use in valuation of the target real estate, the real-estate valuation information including road-related information indicating a position relation between the target real estate and a peripheral road of the target real estate.

17. A real-estate valuation program that causes a computer to execute:
a range acquiring process of acquiring, based on valuation target information in which information regarding a target real estate, which is a valuation-target real estate, is stored, a target range including a position of the target real estate; and
an image analyzing process of extracting, by acquiring a remote sensing image having an observation range including the target range and performing image analysis on the remote sensing image, real-estate valuation information, which is information for use in valuation of the target real estate, the real-estate valuation information including road-related information indicating a position relation between the target real estate and a peripheral road of the target real estate.

18. A real-estate valuation apparatus comprising:
a range acquiring unit to acquire, based on valuation target information in which information regarding a target real estate, which is a valuation-target real estate, is stored, a target range including a position of the target real estate;
an image analyzing unit to extract, by acquiring a remote sensing image having an observation range including the target range in one period or a plurality of periods including a latest observation period and performing image analysis on the remote sensing image, real-estate valuation information, which is information for use in valuation of the target real estate, the real-estate valuation information including road-related information indicating a position relation between the target real estate and a peripheral road of the target real estate;
a comparing and determining unit to compare the real-estate valuation information and range condition information representing a condition of the target range and to determine whether there is a change between the real-estate valuation information and the range condition information; and
an updating unit to update, if there is the change between the real-estate valuation information and the range condition information, the valuation target information based on the change.

19. The real-estate valuation apparatus according to claim 18, wherein
the comparing and determining unit determines whether there is the change by taking previous information regarding the target real estate stored in the valuation target information as the range condition information.

20. The real-estate valuation apparatus according to claim 18 or 19, wherein
the comparing and determining unit determines whether there is the change by taking a result of image analysis on a remote sensing image having an observation period near an acquisition period of the valuation target information as the range condition information.

21. The real-estate valuation apparatus according to any one of claims 18 to 20, wherein
the comparing and determining unit determines whether there is the change by taking cadastral map information, which is real-estate boundary information, as the range condition information.

22. The real-estate valuation apparatus according to any one of claims 18 to 21, wherein
the comparing and determining unit determines whether there is the change by taking geographic space information including the target range as the range condition information.

23. The real-estate valuation apparatus according to any one of claims 18 to 22, wherein
the comparing and determining unit compares quantitative data or qualitative data in the target real estate and the range condition information.

24. The real-estate valuation apparatus according to claim 23, wherein
the comparing and determining unit determines that the change has occurred in at least either a case in which a change in the quantitative data exceeds a threshold set in advance or a case in which the qualitative data changes.

25. The real-estate valuation apparatus according to any one of claims 18 to 24, wherein
the updating unit updates the valuation target information based on timestamp information of a remote sensing image in the latest observation period by using details of the change and a current timestamp.

26. The real-estate valuation apparatus according to according to any one of claims 18 to 25, comprising:
an observation requesting unit to transmit, to a satellite, an observation request, which is a request for observing an observation range including the target range.

27. A real-estate valuation method comprising:
by a computer, acquiring, based on valuation target information in which information regarding a target real estate, which is a valuation-target real estate, is stored, a target range including a position of the target real estate;
by the computer, extracting, by acquiring a remote sensing image having an observation range including the target range in one period or a plurality of periods including a latest observation period and performing image analysis on the remote sensing image, real-estate valuation information, which is information for use in valuation of the target real estate, the real-estate valuation information including road-related information indicating a position relation between the target real estate and a peripheral road of the target real estate;
by the computer, comparing the real-estate valuation information and range condition information representing a condition of the target range and determining whether there is a change between the real-estate valuation information and the range condition information; and
by the computer, updating, if there is the change between the real-estate valuation information and the range condition information, the valuation target information based on the change.

28. A real-estate valuation program that causes a computer to execute:
a range acquiring process of acquiring, based on valuation target information in which information regarding a target real estate, which is a valuation-target real estate, is stored, a target range including a position of the target real estate;
an image analyzing process of extracting, by acquiring a remote sensing image having an observation range including the target range in one period or a plurality of periods including a latest observation period and performing image analysis on the remote sensing image, real-estate valuation information, which is information for use in valuation of the target real estate, the real-estate valuation information including road-related information indicating a position relation between the target real estate and a peripheral road of the target real estate;
a comparing and determining process of comparing the real-estate valuation information and range condition information representing a condition of the target range and determining whether there is a change between the real-estate valuation information and the range condition information; and
an updating process of updating, if there is the change between the real-estate valuation information and the range condition information, the valuation target information based on the change.
